# EUROPÄISCHE PATENTANMELDUNG

(11) **EP 2 731 246 A1**
(43) Veröffentlichungstag der Anmeldung: **14.05.2014**
(21) Anmeldenummer: 12191868.4
(22) Anmeldetag: 08.11.2012
(51) Int. Cl.: H02M 3/156

(54) **Schaltregler**

(71) Anmelder: Delphi Technologies, Inc., Troy, Michigan 48007 (US)
(72) Erfinder: Wiethege, Eric, 51469 Bergisch Gladbach (DE); Wolf, Andreas, 51469 Bergisch Gladbach (DE)
(74) Vertreter: Manitz, Finsterwald & Partner GbR

(57) **Zusammenfassung**

Die Erfindung betrifft einen Schaltregler, umfassend eine Detektionseinheit, einen Ausgangsenergiespeicher, welchem ein Ausgangsstrom entnehmbar ist, und ein Stellglied, das ausgebildet ist, den Ausgangsenergiespeicher aufzuladen. Der Schaltregler zeichnet sich dadurch aus, dass die Detektionseinheit den Ausgangsstrom auf der Grundlage von Schaltvorgängen des Stellglieds ermittelt.

## Beschreibung

Die vorliegende Erfindung betrifft einen Schaltregler, umfassend eine Detektionseinheit, einen Ausgangsenergiespeicher, welchem ein Ausgangsstrom entnehmbar ist, und ein Stellglied, das ausgebildet ist, den Ausgangsenergiespeicher aufzuladen.

Derartige Schaltregler sind generell bekannt, wobei Schaltregler beispielsweise dazu verwendet werden, eine konstante Ausgangsspannung aus einer variablen Eingangsspannung zu erzeugen. Liegt die Ausgangsspannung über der Eingangsspannung, wird von einem Aufwärtswandler (sogenannter Step-Up-Wandler) gesprochen. Wird eine Ausgangsspannung benötigt, die kleiner als die Eingangsspannung ist, so wird ein Abwärtswandler (sogenannter Step-Down-Wandler) verwendet. Üblicherweise ist bei Schaltreglern das Stellglied als Transistor und der Ausgangsenergiespeicher als Spule und/oder Kondensator ausgeführt.

Um die Höhe des Ausgangsstroms zu bestimmen, wird bei bekannten Schaltreglern üblicherweise ein Shunt verwendet. Bei diesem handelt es sich um einen sehr kleinen Widerstand, wobei ein Spannungsabfall an dem Shunt gemessen wird und der Ausgangsstrom durch den Quotienten aus Spannungsabfall an dem Shunt und dem Widerstand des Shunts berechnet wird.

Insbesondere bei Schaltreglern mit hohen Ausgangsströmen wird eine Auswerteschaltung, die einen Spannungsabfall an dem Shunt in den Ausgangsstrom umrechnet, üblicherweise so ausgelegt, dass die Auswerteschaltung bevorzugt hohe Ausgangsströme des Schaltreglers erfasst. Der Dynamikbereich solcher Auswerteschaltungen ist somit begrenzt oder muss mit hohem technischem Aufwand erweitert werden, wenn auch kleinere Ausgangsströme oder Ausgangsströme nahe Null erfasst werden sollen.

Es ist eine der Erfindung zugrundeliegende Aufgabe, einen Schaltregler anzugeben, mit welchem eine möglichst einfache Bestimmung eines Ausgangsstroms eines Schaltreglers und dabei insbesondere von kleinen Ausgangsströmen möglich ist.

Diese Aufgabe wird durch einen Schaltregler mit den Merkmalen des Anspruchs 1 gelöst, und insbesondere dadurch, dass die Detektionseinheit den Ausgangsstrom auf der Grundlage von Schaltvorgängen des Stellglieds ermittelt.

Der Erfindung liegt dabei die Idee zugrunde, dass der Ausgangsstrom des Schaltreglers umso größer ist, umso häufiger und länger der Ausgangsenergiespeicher mittels des Stellglieds aufgeladen wird. Folglich kann durch die Erfassung und Auswertung der Schaltvorgänge des Stellglieds der Ausgangsstrom auf einfache Weise ermittelt werden. Somit ist ein Shunt mit Auswerteschaltung nicht zwingend notwendig, da lediglich der Zustand des Stellglieds überwacht werden muss. Auf eine analoge Strommessung mittels Shunt kann somit zugunsten einer vorzugsweise digitalen Erfassung von Schaltvorgängen verzichtet werden. Vorteilhafterweise ist die erfindungsgemäße Messung des Ausgangsstroms bei beliebigen Arten von Schaltreglern einsetzbar, also beispielsweise bei Aufwärts- und Abwärtswandlern.

Die Detektionseinheit, welche die Schaltvorgänge des Stellglieds überwacht, kann beispielsweise in einer Steuereinheit integriert sein, welche den Schaltregler steuert. Alternativ kann die Detektionseinheit auch separat ausgebildet sein.

Ein Schaltvorgang kann beispielsweise durch ein Ein- oder Ausschalten und weiterhin auch durch ein aufeinanderfolgendes Ein- und Ausschalten definiert sein.

Vorteilhafte Ausführungsformen der Erfindung sind in der Beschreibung, den Zeichnungen sowie den Unteransprüchen beschrieben.

Nach einer ersten vorteilhaften Ausführungsform ermittelt die Detektionseinheit die Anzahl von Schaltvorgängen des Stellgliedes in einem bestimmten Zeitintervall. Die Ermittlung der Anzahl der Schaltvorgänge ist insbesondere dann vorteilhaft, wenn ein Schaltregler verwendet wird, bei dem das Stellglied den Ausgangsenergiespeicher pro Schaltvorgang immer gleich lange auflädt. Aus der Kenntnis der Anzahl der Schaltvorgänge kann somit die Dauer der Aufladung des Ausgangsenergiespeichers ermittelt werden. Aus der Dauer der Aufladung lässt sich wiederum der Ausgangsstrom bestimmen.

Gemäß einer weiteren vorteilhaften Ausführungsform ermittelt die Detektionseinheit die Schaltdauer des Stellglieds in einem bestimmten Zeitintervall (Duty-Cycle). Die Detektionseinheit ermittelt also den zeitlichen Anteil, während welchem der Ausgangsenergiespeicher durch das Stellglied aufgeladen wird. Beispielsweise kann die Detektionseinheit einen Prozentsatz des Zeitintervalls ermitteln, der dem Anteil der Aufladezeit des Ausgangsenergiespeichers entspricht. Insbesondere wird bei Verwendung eines Schaltreglers, welcher mit konstanter Schaltfrequenz betrieben wird, die Schaltdauer bzw. die Pulsbreite eines Schaltsignals gemessen. Bei einem Schaltregler, der mit variabler Schaltfrequenz arbeitet, wird hingegen die Anzahl der Schaltvorgänge ermittelt, da bei solchen Schaltreglern die Schaltfrequenz bei geringerem Ausgangsstrom sinkt.

Alternativ kann auch die Zeitdauer bestimmt werden, in welcher der Ausgangsenergiespeicher nicht aufgeladen wird und das Stellglied somit keinen Strom leitet.

Gemäß einer weiteren vorteilhaften Ausführungsform ist die Detektionseinheit ein Mikroprozessor. Der Mikroprozessor kann Schaltvorgänge beispielsweise an einem Eingang detektieren, wobei vorteilhafterweise durch einen Schaltvorgang ein Interrupt in dem Mikroprozessor ausgelöst wird. Durch die Verwendung von Interrupts ist eine besonders einfache und schnelle Detektion der Schaltvorgänge möglich.

Gemäß einer weiteren vorteilhaften Ausführungsform ist die Detektionseinheit elektrisch mit einem Schalteingang des Stellglieds verbunden. Wird beispielsweise ein Transistor als Stellglied verwendet, so greift die Detektionseinheit Gate-Signale des Transistors ab, um Schaltvorgänge zu erkennen. Alternativ ist es ebenfalls möglich, eine Spannung am Ausgang des Stellglieds, also beispielsweise am Source- oder Drain-Anschluss eines als Feldeffekttransistor (FET) ausgebildeten Stellglieds zu detektieren. Auch kann ein durch das Stellglied fließender Strom detektiert werden, um Schaltvorgänge zu erkennen.

Gemäß einer weiteren vorteilhaften Ausführungsform ist die Detektionseinheit mittels eines Pegelwandlers mit dem Schalteingang des Stellglieds verbunden. Durch den Pegelwandler können dabei unterschiedliche Signalpegel zwischen Stellglied und Detektionseinheit ausgeglichen werden. Weiterhin ist es beispielsweise durch die Zwischenschaltung eines Feldeffekttransistors möglich, eine starke Beeinflussung des Schaltverhaltens des Stellglieds, und insbesondere der Schaltgeschwindigkeit des Stellglieds, zu unterbinden. Alternativ kann abhängig von der Ausführung des Schaltreglers und dessen Betriebsfrequenz auch ein Bipolartransistor zwischengeschaltet werden.

Gemäß einer weiteren vorteilhaften Ausführungsform umfasst der Schaltregler einen Shunt und eine Auswerteschaltung, mit welcher aus einem Spannungsabfall an dem Shunt der Ausgangsstrom ermittelbar ist.

Durch die zusätzliche Anordnung des Shunts und der Auswerteschaltung kann der Bereich erweitert werden, in welchem der Ausgangsstrom des Schaltreglers ermittelbar ist. Vorteilhafterweise wird der Shunt und die Auswerteschaltung zur Erfassung höherer Ausgangsströme herangezogen, wohingegen die Detektionseinheit kleinere Ausgangsströme auf der Grundlage der Schaltvorgänge des Stellglieds ermittelt. Auf diese Weise ergänzen sich Detektionseinheit und Auswerteschaltung.

Die Erfindung umfasst ferner ein Verfahren zum Ermitteln eines Ausgangsstroms eines Schaltreglers, umfassend eine Detektionseinheit, einen Ausgangsenergiespeicher, welchem ein Ausgangsstrom entnehmbar ist, und ein Stellglied, das ausgebildet ist, den Ausgangsenergiespeicher aufzuladen, wobei Schaltvorgänge des Stellglieds detektiert werden und der Ausgangsstrom auf der Grundlage der detektierten Schaltvorgänge des Stellglieds ermittelt wird.

Gemäß einer weiteren vorteilhaften Ausführungsform wird die Anzahl von Schaltvorgängen des Stellglieds in einem bestimmten Zeitintervall ermittelt.

Gemäß einer weiteren vorteilhaften Ausführungsform wird die Schaltdauer des Stellglieds in einem bestimmten Zeitintervall (Duty-Cycle) ermittelt.

Gemäß einer weiteren vorteilhaften Ausführungsform wird ein Schaltregler verwendet, welcher den Ausgangsenergiespeicher durch Schaltvorgänge mit konstanter Dauer auflädt.

Nachfolgend wird die Erfindung rein beispielhaft anhand einer möglichen Ausführungsform unter Bezugnahme auf die beigefügten Zeichnungen beschrieben. Es zeigen:
- Fig. 1: einen Schaltplan eines erfindungsgemäßen Schaltreglers;
- Fig. 2: einen Zusammenhang zwischen Schaltvorgängen und Ausgangsstrom eines Schaltreglers.

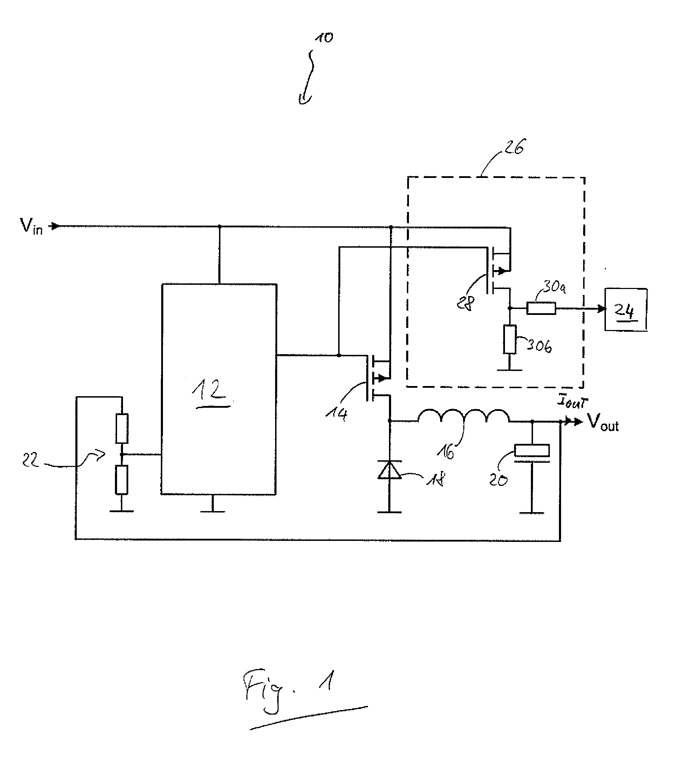

In Fig. 1 ist ein erfindungsgemäßer Schaltregler schematisch dargestellt. Bei dem dargestellten Schaltregler handelt es sich um einen Abwärtswandler 10, welcher durch eine Eingangsspannung Vᵢₙ versorgt wird. Die Eingangsspannung Vᵢₙ wird zunächst einer Steuereinheit 12 sowie einem Leistungstransistor 14 zugeführt. Die Steuereinheit 12 ist elektrisch mit einem Gate-Eingang des Leistungstransistors 14 verbunden. Wird der Leistungstransistor 14 von der Steuereinheit 12 leitend geschaltet, fließt ein Strom durch eine Spule 16, welche mit dem Ausgang des Leistungstransistors 14 verbunden ist, und lädt die Spule 16 auf. Eine Diode 18 ist bei leitendem Leistungstransistor 14 gesperrt, wobei ein Elektrolytkondensator 20 aufgeladen und ein Ausgangsstrom Iₒᵤₜ ausgegeben wird.

Ist der Leistungstransistor 14 abgeschaltet, d.h. der Leistungstransistor 14 sperrt, wird der Ausgangsstrom Iₒᵤₜ durch die in der Spule 16 und dem Elektrolytkondensator 20 gespeicherte Energie gespeist.

Eine Ausgangsspannung Vₒᵤₜ wird der Steuereinheit 12 über einen Spannungsteiler 22 zugeführt. Aufgrund der von der Steuereinheit 12 ermittelten Ausgangsspannung Vₒᵤₜ werden die Ein- und Ausschaltzeiten für den Leistungstransistor 14 bestimmt.

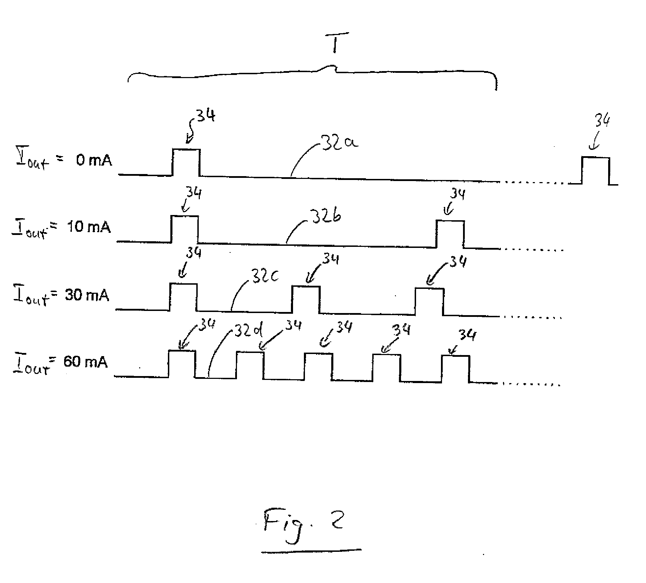

Eine Detektionseinheit 24, die als Mikroprozessor ausgebildet ist, ermittelt den Ausgangsstrom Iₒᵤₜ. Dazu ist zwischen die Detektionseinheit 24 und einen Schalteingang des Leistungstransistors 14 ein Pegelwandler 26 geschaltet, in welchem durch einen Feldeffekttransistor 28 und zwei Widerstände 30a, 30b eine Levelanpassung eines von der Steuereinheit 12 erzeugten Schaltsignals 34 (Fig. 2) für den Leistungstransistor 14 an die Signalpegel der Detektionseinheit 24 erfolgt. Somit kann die Detektionseinheit 24 Schaltvorgänge des Leistungstransistors 14 erkennen.

Beim Betrieb des Abwärtswandlers 10 ermittelt die Detektionseinheit 24 die Dauer, Länge und Häufigkeit der Schaltsignale 34 bzw. der Schaltzyklen des Leistungstransistors 14 und hieraus den Ausgangsstrom Iₒᵤₜ.

Beispielhafte Zusammenhänge zwischen der Häufigkeit der Schaltvorgänge 34 und dem Ausgangsstrom Iₒᵤₜ sind in Fig. 2 dargestellt. Dabei weisen sämtliche in Fig. 2 gezeigten Schaltvorgänge 34 eine gleiche Länge auf. Fig. 2 zeigt vier Schaltsignale 32 mit welchen die Steuereinheit 12 den Leistungstransistor 14 ansteuert. So zeigt ein erstes Schaltsignal 32a lediglich einen Schaltvorgang 34 in einem Zeitintervall T. Der Schaltvorgang 34 umfasst dabei ein Ein- und ein Ausschalten des Leistungstransistors 14. Die Detektionseinheit 24 ermittelt aus dem einen Schaltvorgang 34 einen Ausgangsstrom Iₒᵤₜ von 0 mA.

Werden pro Zeitintervall T zwei Schaltvorgänge 34 detektiert, so ermittelt die Detektionseinheit 24 einen Ausgangsstrom Iₒᵤₜ von 10 mA, wie beispielhaft durch ein zweites Schaltsignal 32b dargestellt ist.

Weitere beispielhafte Zusammenhänge zwischen Häufigkeit von Schaltvorgängen 34 und dem Ausgangsstrom Iₒᵤₜ sind durch Schaltsignale 32c und 32d dargestellt, bei welchen drei und fünf Schaltvorgänge 34 in dem Zeitintervall T einem Ausgangsstrom Iₒᵤₜ von 30 mA bzw. 60 mA entsprechen.

Die Detektionseinheit 24 gibt ein Signal aus, welches dem Ausgangsstrom Iₒᵤₜ entspricht. Der Ausgangsstrom kann aus der Anzahl und/oder Dauer der Schaltvorgänge 34 pro Zeitintervall T beispielsweise durch eine mathematische Formel oder durch empirisch bestimmte Werte, welche in einer Nachschlagetabelle in der Detektionseinheit 24 abgespeichert sind, ermittelt werden.

### Bezugszeichenliste

- 10: Abwärtswandler
- 12: Steuereinheit
- 14: Leistungstransistor
- 16: Spule
- 18: Diode
- 20: Elektrolytkondensator
- 22: Spannungsteiler
- 24: Detektionseinheit
- 26: Pegelwandler
- 28: Feldeffekttransistor
- 30: Widerstand
- 32: Schaltsignal
- 34: Schaltvorgang

- T: Zeitintervall

## Patentansprüche

1. Schaltregler (10), umfassend eine Detektionseinheit (24), einen Ausgangsenergiespeicher (16, 20), welchem ein Ausgangsstrom (Iₒᵤₜ) entnehmbar ist, und ein Stellglied (14), das ausgebildet ist, den Ausgangsenergiespeicher (16, 20) aufzuladen,
**dadurch gekennzeichnet, dass**
die Detektionseinheit (24) den Ausgangsstrom (Iₒᵤₜ) auf der Grundlage von Schaltvorgängen (34) des Stellglieds (14) ermittelt.

2. Schaltregler (10) nach Anspruch 1,
**dadurch gekennzeichnet, dass**
die Detektionseinheit (24) die Anzahl von Schaltvorgängen (34) des Stellglieds (14) in einem bestimmten Zeitintervall (T) ermittelt.

3. Schaltregler (10) nach Anspruch 1 oder 2,
**dadurch gekennzeichnet, dass**
die Detektionseinheit (24) die Schaltdauer des Stellglieds (14) in einem bestimmten Zeitintervall (T) ermittelt.

4. Schaltregler (10) nach einem der vorstehenden Ansprüche,
**dadurch gekennzeichnet, dass**
die Detektionseinheit (24) ein Mikroprozessor ist.

5. Schaltregler (10) nach einem der vorstehenden Ansprüche,
**dadurch gekennzeichnet, dass**
die Detektionseinheit (24) elektrisch mit einem Schalteingang des Stellglieds (14) verbunden ist.

6. Schaltregler (10) nach Anspruch 5,
**dadurch gekennzeichnet, dass**
die Detektionseinheit (24) mittels eines Pegelwandlers (26) mit dem Schalteingang des Stellglieds (14) verbunden ist.

7. Schaltregler (10) nach einem der vorstehenden Ansprüche,
**dadurch gekennzeichnet, dass**
der Schaltregler (10) einen Shunt und eine Auswerteschaltung umfasst, mit welcher aus einem Spannungsabfall an dem Shunt der Ausgangsstrom ermittelbar ist.

8. Verfahren zum Ermitteln eines Ausgangsstroms (Iₒᵤₜ) eines Schaltreglers (10), umfassend eine Detektionseinheit (24), einen Ausgangsenergiespeicher (16, 20), welchem ein Ausgangsstrom (Iₒᵤₜ) entnehmbar ist, und ein Stellglied (14), das ausgebildet, ist den Ausgangsenergiespeicher (16, 20) aufzuladen,
**dadurch gekennzeichnet, dass**
Schaltvorgänge (34) des Stellglieds (14) detektiert werden und der Ausgangsstrom (Iₒᵤₜ) auf der Grundlage der detektierten Schaltvorgänge (34) des Stellglieds (14) ermittelt wird.

9. Verfahren nach Anspruch 8,
**dadurch gekennzeichnet, dass**
die Anzahl von Schaltvorgängen (34) des Stellglieds (14) in einem bestimmten Zeitintervall (T) ermittelt wird.

10. Verfahren nach Anspruch 8 oder 9,
**dadurch gekennzeichnet, dass**
die Schaltdauer des Stellglieds (14) in einem bestimmten Zeitintervall (T) ermittelt wird.

11. Verfahren nach einem der Ansprüche 8 bis 10,
**dadurch gekennzeichnet, dass**
ein Schaltregler (10) verwendet wird, welcher den Ausgangsenergiespeicher (16, 20) durch Schaltvorgänge (34) mit konstanter Dauer auflädt.
